Europäisches Patentamt

European Patent Office

Office européen des brevets

(11) Publication number: **0 626 638 A1**

## EUROPEAN PATENT APPLICATION

(21) Application number: **94105120.3**

(51) Int. Cl.5: **G06F 7/50**

(22) Date of filing: **31.03.94**

(30) Priority: **03.05.93 US 55992**

(43) Date of publication of application:
**30.11.94 Bulletin 94/48**

(84) Designated Contracting States:
**DE FR GB IE IT**

(71) Applicant: **MOTOROLA, INC.**
**1303 East Algonquin Road**
**Schaumburg, IL 60196 (US)**

(72) Inventor: **Ho, Ying-Wai**
**3456 North Hills Drive,**
**No. 154**
**Austin, Texas 78731 (US)**

(74) Representative: **Hudson, Peter David et al**
**Motorola**
**European Intellectual Property**
**Midpoint**
**Alencon Link**
**Basingstoke, Hampshire RG21 1PL (GB)**

(54) **A one's complement adder and method of operation.**

(57) A one's complement adder (18) has a plurality of adder cells (20 through 35) and generate propagate circuitry (36 through 40) for adding a first and a second operand. Each of the adder cells logically adds a selected differing set of input bits. Each set of input bits has a first bit, a second bit and a third bit. The output of each of the adder cells generates a sum bit that is logically equivalent to the least significant bit of a mathematical sum of the three bits. The generate-propagate circuitry generates a generate signal and a plurality of carry bit signals. The generate signal is coupled to one of the adder cells to generate one of the third bits. The plurality of carry bits generates the remaining third bits.

FIG.3-2

**FIG.3-1**

Field of the Invention

The present invention generally relates to digital computing systems, and more specifically to a one's complement adder.

Background of the Invention

Several protocols exist for the representation of binary numbers in digital computing systems. One of these protocols is known as "one's complement." In a one's complement representation, the negation operation of a number is generated by inverting each bit of the number. For instance, the binary representation of the decimal number two and negative two is (0010) and (1101), (from most significant to least significant bit) respectively. The most significant bit indicates the sign of the number. A logic one in the most significant bit indicates that the number is a negative number. A logic zero in the most significant bit indicates that the number is a positive number. This format is obviously convenient to use when the sign of a number is material to a calculation. Also, the same adder can easily perform an add operation of all four sign permutations (A + B, A-B, -A + B, -A-B) of two operands.

One's complement representation has at least one disadvantage: after an addition operation, an additional step is necessary to obtain the correct result. The most significant carry bit must be added to the least significant result or sum bit. This "wrap-around" carry may cause other bits to change also. For instance the sum of three (0011) and negative two (1101) is one. However, a straight bit add of (0011) and (1101) is (10000), where the leading one corresponds to the carry bit from the fourth bit add. In one's complement representation, four zeros correspond to a (positive) zero. As described above, if the most significant carry bit is added to the least significant bit add result, then the correct result is obtained: (0001).

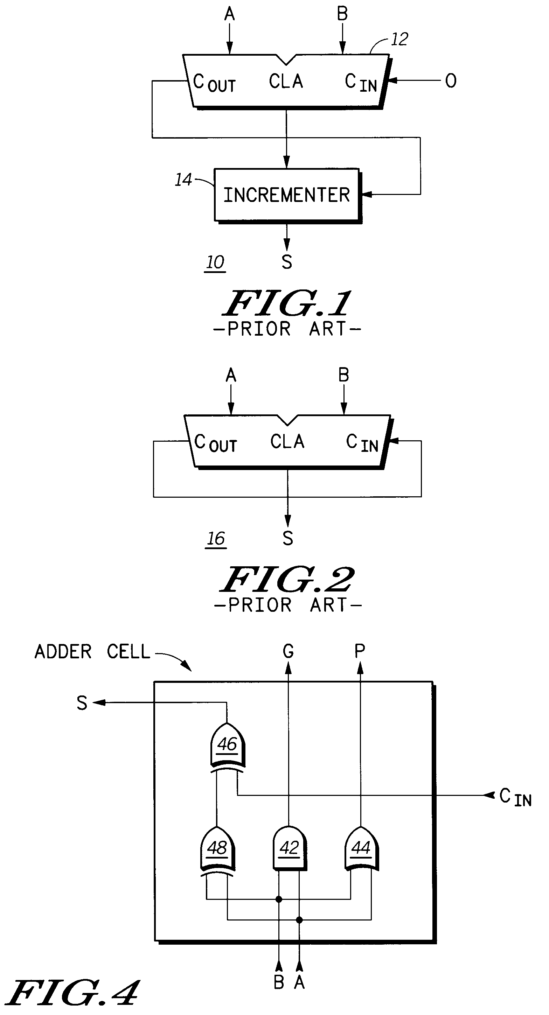

FIG.s 1 and 2 depict a first and a second one's complement adder known in the art. Both adders add two input operands, labeled A and B, and generate a sum result, labeled S. A, B and S are represented in one's complement notation. In the adder 10 depicted in FIG. 1, a carry-look-ahead adder 12 (hereafter simply CLA adder) generates a generic bit add of the two operands A and B and a most significant carry bit, $C_{OUT}$. The generic bit add result and most significant carry bit are input to an incrementer 14. Incrementer 14 adds its two inputs in a subsequent clock cycle. As depicted, the least significant carry bit input, $C_{IN}$, to CLA adder 12 is always a logic zero. In the adder 16 depicted in FIG. 2, the most significant carry bit of a CLA adder is feed directly into the least significant carry bit input of the same CLA adder.

Both adders 10 and 16 generate the correct result and follow the one's complement protocol. However, both adders have disadvantages that make them less than optimal. For instance, adder 10 requires two operations to perform an add operation and requires die area for both CLA adder 12 and incrementer 14. Though smaller than adder 10, adder 16 requires a minimum time for the CLA adder 12 to generate the most significant carry bit, feed it back into the least significant carry bit input, and allow the bit to propagate through CLA adder 12. This minimum time may impose a limitation on the clock speed of a system, such as a data processor, incorporating the adder. Also, integrated circuits must now be designed and modeled on complex computer aided design tools. Many of these tools can not model single-cycle feedback loops such as the one occurring in adder 16. This limitation precludes the use of adder 16 with many design methodologies.

Summary of the Invention

In accordance with the present invention, there is disclosed a one's complement adder having a carry bit feedback mechanism which substantially eliminates disadvantages of prior one's complement adders.

A one's complement adder has a plurality of adder cells and generate propagate circuitry for adding a first and a second operand. Each of the adder cells logically adds a selected differing set of input bits. Each set of input bits has a first bit, a second bit and a third bit. The output of each of the adder cells generates a sum bit that is logically equivalent to the least significant bit of a mathematical sum of the three bits. The generate-propagate circuitry generates a generate signal and a plurality of carry bit signals. The generate signal is coupled to one of the adder cells to generate one of the third bits. The plurality of carry bits generates the remaining third bits.

In addition, a method of operating a one's complement adder has the steps of generating a plurality of sum bits and generating a plurality of third bits. Each sum bit is generated by a selected differing one of a plurality of adder cells. Each one of the plurality of sum bits is logically equivalent to the least significant bit of a selected differing mathematical sum of a selected differing one of a plurality of first operand bits, a selected differing one of a plurality of second operand bits and a selected differing one of a plurality of third bits. The step of generating a plurality of third bits further has the steps of generating a group generate signal, generating a plurality of carry bits and providing the group generate and the plurality of carry bits as the plurality of third bits. A generate-propagate circuit coupled to the plurality of adder cells generates the group generate signal and the plurality of carry bits.

Brief Description of the Drawings

The features and advantages of the present invention will be more clearly understood from the following detailed description taken in conjunction with the accompanying FIGURES where like numerals refer to like and corresponding parts and in which:

FIG.s 1 and 2 depict a first and a second one's complement adder known the art;

FIG. 3 (divided into a left-hand portion labeled 3-1 and a right-hand portion labeled 3-2) depicts a block diagram of a one's complement adder constructed in accordance with the present invention;

FIG. 4 depicts a logic diagram of the adder cell illustrated in FIG. 3; and

FIG. 5 depicts a logic diagram of the group generate/propagate block illustrated in FIG. 3.

Detailed Description of a Preferred Embodiment

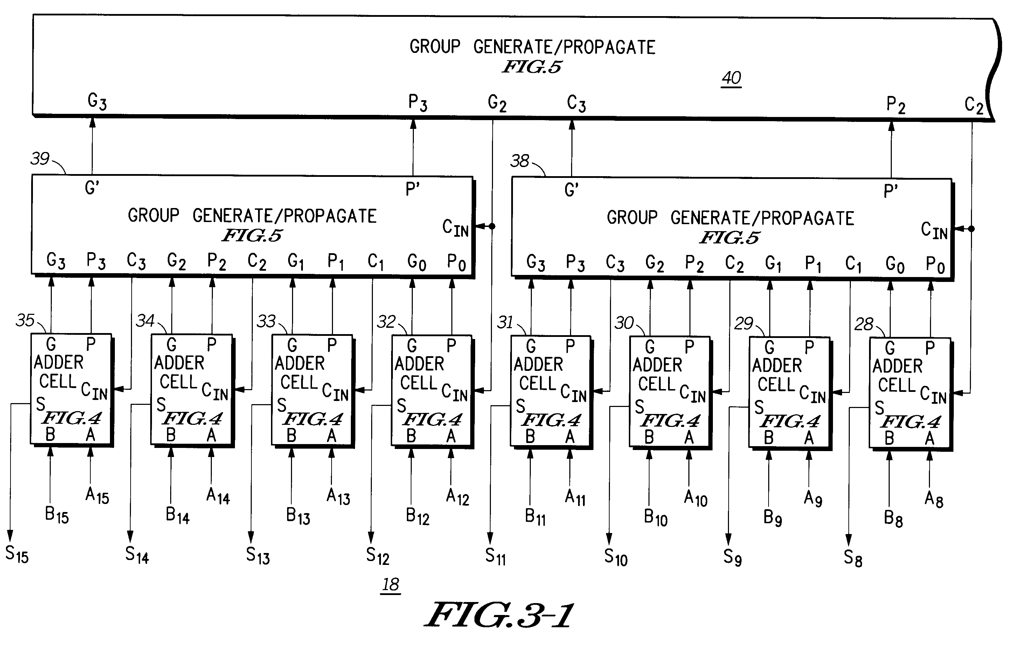

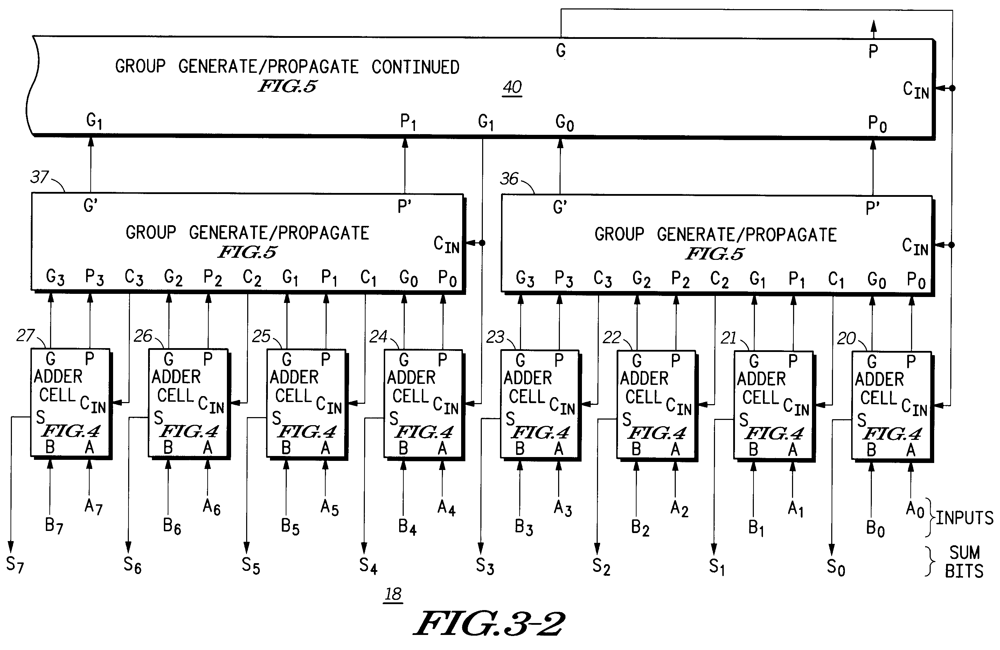

FIG. 3 (divided into a left-hand portion labeled 3-1 and a right-hand portion labeled 3-2) depicts a block diagram of a one's complement adder (hereafter simply adder) 18 constructed in accordance with the present invention. Adder 18 receives two sixteen-bit operands (labeled $A_0$ through $A_{15}$ and $B_0$ through $B_{15}$, respectively) and generates a result sum (labeled S0 through S15). The operands A and B and the result sum S are all represented in one's complement form. As will be described below, adder 18 generates a group generate signal and inputs this signal as the input carry bit, $C_{IN}$. The group generate signal is dependent only upon the operands A and B. Therefore, adder 18 performs an add operation in a single cycle, is reasonably small and is compatible with computer aided design methodologies.

Adder 18 has sixteen two-bit adder cells 20 through 35 (labeled ADDER CELL) and five group generate-group propagate generators 36 through 40 (labeled GROUP GENERATE/PROPAGATE).

Each two-bit adder cell 20 through 35 logically adds three input bits, A, B and $C_{IN}$, and generates a sum bit, S, a generate signal, G, and a propagate signal, P. The particular identity of the bits, A, B and $C_{IN}$, that each two-bit adder cell receives depends upon the position of the two-bit adder cell within adder 18. For instance, the ith two-bit adder cell receives the ith bit of each of the operands A and B and generates the ith sum bit, where i is an integer index. The input carry bit of two-bit adder cell 20 is connected to the group generate signal from group generate-group propagate generator 40. The input carry bits of two-bit adder cells 24, 28 and 32 are connected to the first, second and third carry bits, respectively, from group generate-group propagate generator 40. The input carry bits of two-bit adder cells 21, 25, 29 and 33 are connected to the first carry bits from group generate-group propagate generators 36, 37, 38 and 39, respectively. The input carry bits of two-bit adder cells 22, 26, 30 and 34 are connected to the second carry bits from group generate-group propagate generators 36, 37, 38 and 39, respectively. The input carry bits of two-bit adder cells 23, 27, 31 and 35 are connected to the third carry bits from group generate-group propagate generators 36, 37, 38 and 39, respectively. The generate and propagate functions are described below.

Each group generate-group propagate generator 36 through 39 receives four sets of generate and propagate signals from four two-bit adder cells and an input carry bit, $C_{IN}$. Each group generate-group propagate generator 36 through 40 generates three carry bits, $C_1$, $C_2$ and $C_3$, a group generate signal, G', and a group propagate signal, P'. The particular identity of the generate, propagate and input carry bit signals that each group generate-group propagate generator receives depends upon the position of the group generate-group propagate generator within adder 18. For instance, group generate-group propagate generator 36 receives the generate and propagate signals generated by the two-bit adder cells 20 through 23. Group generate-group propagate generator 36 receives the group generate signal generated by group generate-group propagate generator 40 as its input carry bit. Group generate-group propagate generator 37 receives the generate and propagate signals generated by two-bit adder cells 24 through 27. Group generate-group propagate generator 37 receives the first carry bit output signal generated by group generate-group propagate generator 40 as its input carry bit. Group generate-group propagate generator 38 receives the generate and propagate signals generated by two-bit adder cells 28 through 31. Group generate-group propagate generator 38 receives the second carry bit output signal generated by group generate-group propagate generator 40 as its input carry bit. Group generate-group propagate generator 39 receives the generate and propagate signals generated by the two-bit adder cells 32 through 35. Group generate-group propagate generator 39 receives the third carry bit output signal generated by group generate-group propagate generator 40 as its input carry bit. The group generate and group propagate functions are described below.

Group generate-group propagate generator 40 receives four sets of generate and propagate signals from group generate-group propagate generators 36 through 39 and an input carry bit, $C_{IN}$. Group generate-group propagate generator 40 also generates three carry bits, $C_1$, $C_2$ and $C_3$, a group generate signal and a group propagate signal, G' and P', respectively. The group propagate signal is connected to the input carry bit, both of group generate-group propagate generator 40. The group generate and group propagate functions are described below.

FIG. 4 depicts a logic diagram of an exemplary adder cell illustrated in FIG. 3. An output of an AND gate 42 generates the generate signal, G. A first and a second input of AND gate 42 are connected to the input bits, A and B, respectively. An output of a OR gate 44 generates the propagate signal, P. A first and a second input of OR gate 44 are connected to the input bits, A and B, respectively. An output of a XOR gate 46 generates the add result, S. A first and a second input of XOR gate 46 are connected to an output of a XOR gate 48 and to a carry bit, $C_{IN}$, respectively. A first and a second input of XOR gate 48 are connected to the input bits, A and B, respectively.

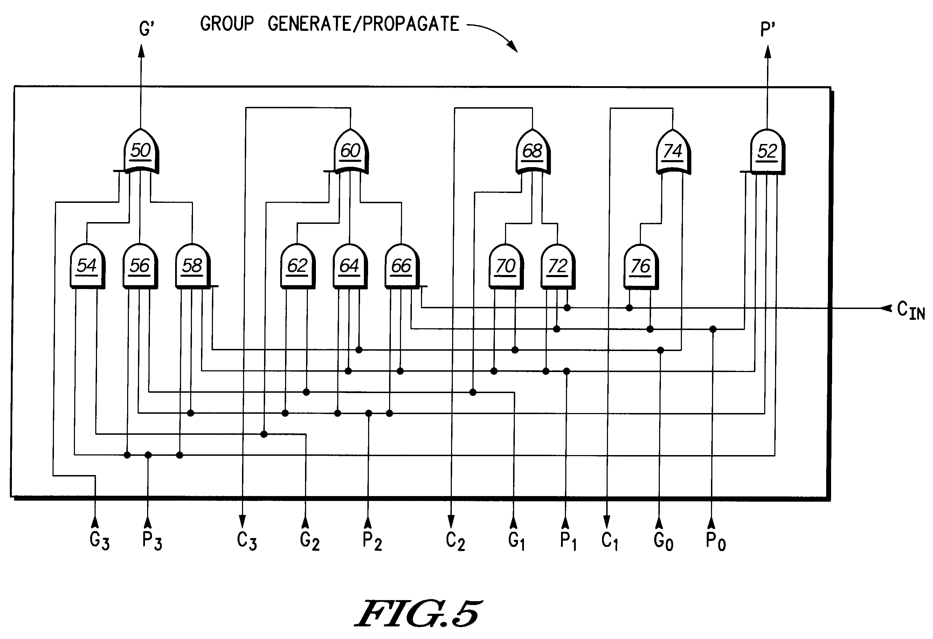

FIG. 5 depicts a logic diagram of an exemplary group generate/propagate block illustrated in FIG. 3.

An output of a four-input OR gate 50 and an output of a four-input AND gate 52 generate the group generate and group propagate functions, G', and P', respectively. A first input of OR gate 50 is connected to the input signal $G_3$. A second, a third and a fourth input of OR gate 50 are connected to an output of a two-input AND gate 54, to an output of a three-input AND gate 56 and to an output of a four-input AND gate 58, respectively. A first and a second input of AND gate 54 are connected to the input signals $P_3$ and $G_2$, respectively. A first, a second and a third input of AND gate 56 are connected to the input signals $P_3$, $P_2$ and $G_1$, respectively. A first, a second, a third and a fourth input of AND gate 58 are connected to the input signals $P_3$, $P_2$, $P_1$ and $G_0$, respectively. A first, a second, a third and a fourth input of AND gate 52 are connected to the input signals $P_3$, $P_2$, $P_1$ and $P_0$, respectively.

An output of a four-input OR gate 60 generates the third carry bit, $C_3$. A first, a second, a third and a fourth input of OR gate 60 are connected to the input signal $G_2$, to an output of a two-input AND gate 62, to an output of a three-input AND gate 64 and to an output of a four-input AND gate 66, respectively. A first and a second input of AND gate 62 are connected to the input signals $P_2$ and $G_1$, respectively. A first, a second and a third input of AND gate 64 are connected to the input signals $P_2$, $P_1$ and $G_0$, respectively. A first, a second, a third and a fourth input of AND gate 66 are connected to the input signals $P_2$, $P_1$, $P_0$ and to the input carry bit, $C_{IN}$, respectively.

An output of a three-input OR gate 68 generates the second carry bit, $C_2$. A first, a second and a third input of OR gate 68 are connected to the input signal $G_1$, to an output of a two-input AND gate 70 and to an output of a three-input AND gate 72. A first and a second input of AND gate 70 are connected to the input signals $P_1$ and $G_0$, respectively. A first, a second and a third input of AND gate 72 are connected to the input signals $P_1$, $P_0$ and to the input carry bit, $C_{IN}$, respectively.

An output of a two-input OR gate 74 generates the first carry bit, C1. A first and a second input of OR gate 74 is connected to an output of an AND gate 76 and to the input signal $G_0$. A first and a second input of AND gate 76 are connected to the input signals $P_0$ and to the input carry bit, $C_{IN}$, respectively.

Mathematically, each add operation generates sixteen sum bits and sixteen carry bits. In general, the ith sum bit and the ith carry bit may be represented by the following formulas:

$$S_i = A_i \oplus B_i \oplus C_i \qquad \text{Eq. 1}$$

$$C_{i+1} = A_i B_i + C_i (A_i + B_i). \qquad \text{Eq.2}$$

Equations 1 and 2 may be modified with the introduction of a generate signal, G, and a propagate signal, P, for each bit. The generate and propagate functions are created by observing that the ith bit add will generate a carry bit if either of two conditions is met: (1) both bits are true, or (2) one of the bits is true and the carry bit is also true. The bit generate and bit signals mathematically express these two conditions. The bit generate and bit propagate functions do not depend upon the input carry bit, $C_{IN}$:

$$G_i = A_i B_i \qquad \text{Eq. 3}$$

$$P_i = A_i + B_i. \qquad \text{Eq. 4}$$

The carry bits for the first four two-bit adder cells, for instance, may be expressed in terms of the bit generate and bit propagate equations 3 and 4:

$$C_1 = G_0 + P_0 C_0 \qquad \text{Eq. 5}$$

$$C_2 = G_1 + P_1 G_0 + P_1 P_0 C_0 \qquad \text{Eq. 6}$$

$$C_3 = G_2 + P_2 G_1 + P_2 P_1 G_0 + P_2 P_1 P_0 C_0 \qquad \text{Eq. 7}$$

$$C_4 = G_3 + P_3 G_2 + P_3 P_2 G_1 + P_3 P_2 P_1 G_0 + P_3 P_2 P_1 P_0 C_0 \qquad \text{Eq. 8}$$

In general, any carry bit may be determined from the generalization:

$$C_{i+1} = G_i + P_i G_{i-1} + P_i P_{i-1} G_{i-2} + \cdots + P_i P_{i-1} \ldots P_0 C_0 \qquad \text{Eq. 9}$$

An adder generate signal, G'', and an adder propagate signal, P'', may be extracted from Eq. 9 where i equals fifteen. These generate and propagate signals are also independent of the input carry bit, $C_0$, :

$$C_{16} = G'' + P'' C_0 \qquad \text{Eq. 10}$$

where

$$
\begin{aligned}
G'' = {} & G_{15} + P_{15} G_{14} + P_{15} P_{14} G_{13} + P_{15} P_{14} P_{13} G_{12} + \\
& P_{15} P_{14} P_{13} P_{12} G_{11} + P_{15} P_{14} P_{13} P_{12} P_{11} G_{10} + \\
& P_{15} P_{14} P_{13} P_{12} P_{11} P_{10} G_9 + P_{15} P_{14} P_{13} P_{12} P_{11} P_{10} P_9 G_8 + \\
& P_{15} P_{14} P_{13} P_{12} P_{11} P_{10} P_9 P_8 G_7 + P_{15} P_{14} P_{13} P_{12} P_{11} P_{10} P_9 P_8 P_7 G_6 + \\
& P_{15} P_{14} P_{13} P_{12} P_{11} P_{10} P_9 P_8 P_7 P_6 G_5 + P_{15} P_{14} P_{13} P_{12} P_{11} P_{10} P_9 P_8 P_7 P_6 P_5 G_4 + \\
& P_{15} P_{14} P_{13} P_{12} P_{11} P_{10} P_9 P_8 P_7 P_6 P_5 P_4 G_3 + \\
& P_{15} P_{14} P_{13} P_{12} P_{11} P_{10} P_9 P_8 P_7 P_6 P_5 P_4 P_3 G_2 + \\
& P_{15} P_{14} P_{13} P_{12} P_{11} P_{10} P_9 P_8 P_7 P_6 P_5 P_4 P_3 P_2 G_1 + \\
& P_{15} P_{14} P_{13} P_{12} P_{11} P_{10} P_9 P_8 P_7 P_6 P_5 P_4 P_3 P_2 P_1 G_0
\end{aligned}
$$

and

$$P'' = P_{15} P_{14} P_{13} P_{12} P_{11} P_{10} P_9 P_8 P_7 P_6 P_5 P_4 P_3 P_2 P_1 P_0 .$$

In general, the generate signal of an n bit one's complement adder is given by the relation:

$$
\begin{aligned}
G'' = {} & G_{n-1} + P_{n-1} G_{n-2} + P_{n-1} P_{n-2} G_{n-3} + P_{n-1} P_{n-2} P_{n-3} G_{n-4} + \cdots + \\
& P_{n-1} P_{n-2} P_{n-3} \cdots P_4 P_3 G_2 + P_{n-1} P_{n-2} P_{n-3} \cdots P_3 P_2 G_1 + \qquad \text{Eq. 11} \\
& P_{n-1} P_{n-2} P_{n-3} \cdots P_2 P_1 G_0
\end{aligned}
$$

Returning to the prior art FIG. 1, the output of CLA adder 12 is incremented by incrementer 14 if and only if the carry bit output, $C_{OUT}$, of CLA adder 12 is a logic one. There are four possible combinations of the final group generate and group propagate signals internal to CLA adder 12: 00, 01, 10 and 11 where the first and second digits correspond to the group generate and propagate signals, respectively. These four possible combinations result in the output carry bit values, 0, $C_{IN}$, 1, and 1, respectively. However, CLA adder 10 has its input carry bit connected to a voltage supply corresponding to a zero logic value. With this constraint, the group generate signal defined above in Equation 11 is logically equivalent to the output carry bit . Therefore, the group generate signal depicted in FIG. 3 may be connected to the input carry bit to perform a one's complement addition. This connection results in a logic model that may be simulated by integrated circuit design tools.

The approach of using Equations 10 and 11 to generate the generate signal G'', however, is limited by the problems of fan-in and modularity. The problem of fan-in arises because the (nth + 1) carry bit of an n-bit adder requires a circuit capable of logically OR'ing (n + 1) inputs. Though this requirement may only be awkward for a sixteen-bit adder, it is impossible for larger adders. The problem of modularity arises because it is undesirable to design a completely different adder for each adder implementation. As a consequence of these problems, the preferred embodiment of the disclosed invention is designed as multi-level adder. This solution minimizes both the problems of fan-in and modularity while imposing only a small time penalty.

In a multi-level adder implementation, the number of levels, L, the number of bits in each operand, n, and the fan-in, r, may be related by the expression:

$$L = [\log_r n] \qquad \text{Eq. 12}$$

The use of Equation 12 allows adder 18 to by implemented with identical circuit blocks in each of two levels. One skilled in the art, in conjunction with the present description, may construct a one's complement adder using two or more different circuit blocks. It should be understood that the scope of the disclosed invention is not limited to a particular number of levels or symmetry requirement. In the disclosed embodiment, n equals sixteen, r equals four and L equals 2. The sixteen pairs of operand bits are divided into four blocks of four bit-pairs each. Each block within the first level generates a group generate signal, G', and a group propagate signal, P'. These signals may be extracted from Eq. 8, above:

$$G' = G_3 + P_3 G_2 + P_3 P_2 G_1 + P_3 P_2 P_1 G_0 \qquad \text{Eq. 13}$$

$$P' = P_3 P_2 P_1 P_0 \qquad \text{Eq. 14}$$

Equations 10 and 11 represent the group generate and group propagate signals generated by group generate-group propagate generator 36. The group generate and group propagate functions for group generate-group propagate generators 37, 38 and 39 may be obtained by incrementing each of the indices in Equations 10 and 11 by four, eight, and twelve, respectively. As depicted in FIG. 3, the generate function generated by group generate-group propagate generator 40 is derived from the outputs of group generate-group propagate generators 36, 37, 38 and 39. Therefore, the generate signal generated by group generate-group propagate generator 40 is the adder generate signal described above and connected to the carry bit input of adder cell 20.

It is conceivable that a one's complement adder constructed in accordance with the present invention, may be embodied as a single level adder. Such an implementation may be appropriate given only a small number of pairs of operand bits, a relatively slow cycle time, or both. In this case, adder 18 would have only a single group generate signal which would be connected to the carry bit input of the least significant adder cell and to the carry bit input of the single group generate-group propagate circuit.

Although the present invention has been described with reference to a specific embodiment, further modifications and improvements will occur to those skilled in the art. For instance, other level schemes may be used to implement the same sixteen-bit adder. Larger operand sizes will require a larger adder. Also, the depicted logic diagrams and Equations may be implemented using complementary logic diagrams and complementary Equations depending upon several constraints. These constraints may include the type of process used to manufacture adder 18. It is to be understood therefore, that the invention encompasses all such modifications that do not depart from the spirit and scope of the invention as defined in the appended claims.

**Claims**

1. A one's complement adder (18) comprising:
    a plurality of adder cells (20 through 35) logically adding a plurality of sets of input bits, each of the plurality of sets comprising a first bit and a second bit, each of the plurality of adder cells comprising:

a first input terminal for receiving the first bit (A) of a selected one of the plurality of sets;

a second input terminal for receiving the second bit (B) of the selected one of the plurality of sets;

a third input terminal for receiving a third bit ($C_{iN}$) of the selected one of the plurality of sets;

result circuitry (46, 48) coupled to the first, second and third input terminals for generating a sum bit, the sum bit being logically equivalent to a least significant bit of a mathematical sum of the first, second and third bits of the selected set; and

generate-propagate circuitry (42, 44) coupled to each of the first and second input terminals, the generate-propagate circuitry generating a generate signal and a plurality of carry bit signals, the generate signal coupled to the third terminal of a selected one of a plurality of adder cells, each of the plurality of carry bit signals coupled to the third terminal of a selected differing one of the remaining adder cells of the plurality of adder cells.

2.  A one's complement adder (18) for adding a first operand, A, and a second operand, B, the first operand and second operand each comprising a plurality of n bits, where n is an integer, the one's complement adder comprising:

a plurality of n bit means (20 through 35), each of the plurality of n bit means adding a selected ith one of a plurality of sets of received bits, where i is an integer index ranging from 0 to n-1, the selected ith set of the plurality of sets of received bits comprising an ith one of the first operand bits, A, and an ith one of the second operand bits, B, a selected first one of the plurality of sets of received bits comprising a generate bit, G'', the remaining ones of the plurality of sets of received bits comprising an ith one of a plurality of carry bits, C, an ith one of the plurality of n bit means generating an ith one of a plurality of sum bits, S, an ith one of a plurality of generate bits, G, and an ith one of a plurality of propagate bits, P, wherein

$S_0 = A_0 \oplus B_0 \oplus G''$ for i = 0,
$S_i = A_i \oplus B_i \oplus C_i$ for i≠0,
$G_i = A_i B_i$, and $P_i = A_i + B_i$;

a group generate means (50) coupled to the plurality of n bit means, the group generate means generating the group generate bit, G'', wherein

$$G'' = G_{n-1} + P_{n-1}G_{n-2} + P_{n-1}P_{n-2}G_{n-3} + P_{n-1}P_{n-2}P_{n-3}G_{n-4} + \cdots +$$
$$P_{n-1}P_{n-2}P_{n-3}\cdots P_4 P_3 G_2 + P_{n-1}P_{n-2}P_{n-3}\cdots P_3 P_2 G_1 +$$
$$P_{n-1}P_{n-2}P_{n-3}\cdots P_2 P_1 G_0 \qquad\qquad ;$$

and

a plurality of n-1 carry bit means (60, 68, 74) respectively coupled to (n-1) ones of the plurality of n bit means, an ith one of the plurality of n-1 carry bit means generating the ith one of the plurality of carry bits, wherein

$C_{i+1} = G_i + P_i G_{i-1} + P_i P_{i-1} G_{i-2} + \cdots + P_i P_{i-1}...P_0 G''$ for $0 \leq i < n-1$.

3.  A method of adding a first operand, A, and a second operand, B, in one's complement representation, each operand comprising n bits, where n is an integer, the method comprising the steps of:

generating a plurality of sum bits, each sum bit generated by a selected differing one of a plurality of adder cells, each one of the plurality of sum bits logically equivalent to a least significant bit of a selected one of a plurality of mathematical sums, each one of the plurality of mathematical sums is a sum of: (1) a selected differing one of a plurality of first operand bits, (2) a selected differing one of a plurality of second operand bits and (3) a selected differing one of a plurality of third bits; and

generating the plurality of third bits in a generate-propagate circuit coupled to the plurality of adder cells comprising the steps of:

generating a group generate signal;

generating a plurality of carry bits; and

providing the group generate signal and the plurality of carry bits as the plurality of third bits.

4. The method of claim 3 wherein the step of generating a plurality of sum bits further comprises the steps of:

generating a plurality of bit generate signals; and
generating a plurality of bit propagate signals.

5. The method of claim 4 wherein the step of generating a plurality of sum bits comprises the step of generating an ith sum bit of the plurality of sum bits, S, where i is an integer index ranging from 0 to n-1, according to the following expression:

$S_0 = A_0 \oplus B_0 \oplus G''$ for $i = 0$,
$S_i = A_i \oplus B_i \oplus C_i$ for $i \neq 0$; and

wherein the step of generating a plurality of third bits comprises the step of generating the plurality of bit generate signals, G, the plurality of bit propagate signals, P, the plurality of carry bits, C, and the group generate signal, G'', according to the following expressions:

$G_i = A_i B_i$,
$P_i = A_i + B_i$; and
$C_{i+1} = G_i + P_i G_{i-1} + P_i P_{i-1} G_{i-2} + \cdots + P_i P_{i-1}...P_0 G''$,

$$G'' = G_{n-1} + P_{n-1} G_{n-2} + P_{n-1} P_{n-2} G_{n-3} + P_{n-1} P_{n-2} P_{n-3} G_{n-4} + \cdots +$$
$$P_{n-1} P_{n-2} P_{n-3} \cdots P_4 P_3 G_2 + P_{n-1} P_{n-2} P_{n-3} \cdots P_3 P_2 G_1 +$$
$$P_{n-1} P_{n-2} P_{n-3} \cdots P_2 P_1 G_0 \quad .$$

**FIG.1**
-PRIOR ART-

**FIG.2**
-PRIOR ART-

**FIG.4**

GROUP GENERATE/PROPAGATE
FIG.5
40

GROUP GENERATE/PROPAGATE
FIG.5

GROUP GENERATE/PROPAGATE
FIG.5

ADDER CELL
FIG.4

EP 0 626 638 A1

FIG.3-1

18

GROUP GENERATE/PROPAGATE CONTINUED
*FIG.5*

*40*

GROUP GENERATE/PROPAGATE
*FIG.5*

GROUP GENERATE/PROPAGATE
*FIG.5*

ADDER CELL *FIG.4*

INPUTS

SUM BITS

*18*

# *FIG.3-2*

EP 0 626 638 A1

GROUP GENERATE/PROPAGATE

FIG.5

EP 0 626 638 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y | US-A-4 298 952 (GUENTHNER ET AL.)<br>* the whole document * | 1<br>2-5 | G06F7/50 |
| Y | PATTERSON ET AL. 'Computer Architecture A Quantitative Approach'<br>1990 , MORGAN KAUFMANN , SAN MATEO, CA, USA , XP407059<br>* pages A32-A37 * | 2-5 | |
| X<br>Y | US-A-4 099 248 (BORGERSON ET AL.)<br>* the whole document * | 1<br>2-5 | |
| Y | US-A-5 047 974 (YOUNG)<br>* column 1, line 50 - column 2, line 35; figure 8 * | 2-5 | |
| Y | US-A-3 970 833 (GEHWEILER ET AL.)<br>* column 7, line 16 - line 50; figures 1,8 * | 1-5 | |
| Y | THE EIGHTTEENTH INTERNATIONAL SYMPOSIUM ON MULTIPLE-VALUED LOGIC, 24 May 1988, PALMA DE MALLORCA, SPAIN<br>pages 294 - 299<br>MANZOUL ET AL. 'Quaternary logic for carry-lookahead binary addition'<br>* page 294, right column, paragraph II - page 295, left column, paragraph III; figure 1 * | 1-5 | **TECHNICAL FIELDS SEARCHED** (Int.Cl.5)<br><br>G06F |

The present search report has been drawn up for all claims

| Place of search | Date of completion of the search | Examiner |
|---|---|---|
| BERLIN | 9 August 1994 | Durand, J |